# EUROPÄISCHE PATENTANMELDUNG

(11) **EP 4 703 246 A1**
(43) Veröffentlichungstag der Anmeldung: **04.03.2026**
(21) Anmeldenummer: 24196759.5
(22) Anmeldetag: 27.08.2024
(51) Int. Cl.: B62D 59/04

(54) **VERFAHREN UND SYSTEM ZUR NIVELLIERUNG EINES FAHRZEUGANHÄNGERS**

(71) Anmelder: Knott GmbH, D-83125 Eggstätt (DE)
(72) Erfinder: Mertinko, Christian, 83301 Traunreut (DE)
(74) Vertreter: Flach Bauer & Partner Patentanwälte mbB

(57) **Zusammenfassung**

Die vorliegende Erfindung betrifft ein Verfahren und ein System zur Nivellierung eines Fahrzeuganhängers (100). Das Verfahren umfasst das Erfassen (1200) einer Schrägstellung des Fahrzeuganhängers (100) mittels einer Sensorvorrichtung (300), das Bestimmen (1210) einer Position eines Hebemittels (400) in Bezug auf ein Rad (130, 132) des Fahrzeuganhängers (100), welches Rad (130, 132) zur Nivellierung angehoben werden muss, sowie das Ansteuern (1220) zumindest eines Rangierantriebs (140, 142) des Fahrzeuganhängers mittels einer Steuervorrichtung (200), sodass der Fahrzeuganhänger zur Nivellierung auf das Hebemittel (400) gefahren wird.

## Beschreibung

### Gebiet der Erfindung

Die Erfindung betrifft ein Verfahren zur Nivellierung eines Fahrzeuganhängers, ein System zur Nivellierung eines Fahrzeuganhängers, einen automatisch nivellierbareren Fahrzeuganhänger, sowie ein Computerprogramm.

### Hintergrund

Fahrzeuganhänger und insbesondere Wohnanhänger (bzw. Campinganhänger) können aufgrund eines unebenen Untergrunds und/oder einer ungleichmäßigen Beladung des Fahrzeuganhängers im Stand um eine Querachse (Y-Achse) und/oder eine Längsachse (X-Achse) verkippt sein, also nicken und/oder rollen. Mithin stehen Fahrzeuganhänger oftmals schräg. Dies ist unerwünscht.

Um die Funktionalität des Fahrzeuganhängers im Stand sicherzustellen und einen hohen Wohnkomfort bei Wohnanhängern zu erreichen, ist es wichtig den Fahrzeug- bzw. Wohnanhänger zu nivellieren, also in Waage zu bringen.

Denn ist der Fahrzeuganhänger in einer Schrägstellung kann nicht sichergestellt werden, dass mitgeführtes Trink- und/oder Brauchwasser ordnungsgemäß durch die Leitungen fließt. Zudem kann es zu Problemen bei der Tankfüllung und -entleerung geben. Soll in einem schrägstehenden Fahrzeuganhänger gekocht werden, entsteht ein erhebliches Sicherheitsrisiko, da heißes Wasser austreten und/oder Kochgeschirr verrutschen könnte.

Weiterhin führt eine Schrägstellung zu einer Verminderung des Schlafkomforts.

Überdies kann die Schrägstellung zu einem ungleichmäßigen Lastabtrag des Gewichts des Fahrzeuganhängers führen und somit die Komponenten des Fahrzeuganhängers, insbesondere Rahmen und/oder Fahrgestell, ungünstig belasten oder sogar schädigen.

Um die dauerhafte Schrägstellung im Stand zu vermeiden sind unterschiedliche Systeme bekannt.

Üblich und weit verbreitet sind mechanische Stützensysteme. Diese umfassen manuell zu betätigende Stützen, die typischerweise an Front und Heck des Fahrzeuganhängers angeordnet sind. Solche Stützensysteme sind nicht dazu geeignet eine Schrägstellung um die Längsachse (Rollen) auszugleichen, sondern dienen vornehmlich der Nivellierung einer Verkippung um die Querachse (Nicken). Denn der Rahmen bzw. das Fahrgestell gewöhnlicher Fahrzeuganhänger ist nicht steif genug, um das Fahrzeuganhängergewicht über die Stützen vollständig abzutragen. Dies erfolgt über maßgeblich über die Räder. Die Stützen dienen nur der Fixierung des Fahrzeuganhängers in der nivellierten (im Wesentlichen horizontalen) Stellung. Würden sie auch zum Nivellieren einer Schrägstellung um die Längsachse (Rollen) eingesetzt, käme es - aufgrund der hohen wirkenden Kräfte - zu einer Verwindung und mithin Beschädigung des Rahmens.

Sollte der Fahrzeuganhänger ausschließlich über mechanische Stützensysteme nivellierbar sein, erfordert dies einen entsprechend steif ausgelegten Rahmen. Hierdurch entstehen hohe Kosten und unerwünscht hohe Fahrzeuganhängergewichte.

Zudem sind Nivelliersysteme bekannt, die auf dem Fahrwerk des Anhängers basieren. Hierzu können beispielsweise Federn (z.B. Luftfedern) des Fahrwerks des Anhängers eingestellt werden, um so auch eine Schrägstellung um die Längsachse (Rollen) auszugleichen. Ebenso ist es bekannt an den Radachsen hydraulische Hebevorrichtungen anzubringen, um ein Rollen des Fahrzeuganhängers auszugleichen. Derartig einstellbare Fahrwerke sind jedoch teuer, schwer und wartungsintensiv.

### Zusammenfassung

Vor diesem Hintergrund stellt sich die vorliegende Erfindung die Aufgabe ein verbessertes, insbesondere vereinfachtes Verfahren und System zur Nivellierung eines Fahrzeuganhängers bereitzustellen.

Diese Aufgabe wird erfindungsgemäß durch ein Verfahren nach Anspruch 1 und durch ein System nach Anspruch 6 (Nivelliersystem) gelöst. Weitere Aspekte der Erfindung sind in den abhängigen und nebengeordneten Ansprüchen, sowie in der nachfolgenden Beschreibung beschrieben.

Insbesondere wird die Aufgabe durch ein Verfahren zur Nivellierung eines Fahrzeuganhängers, insbesondere zur Nivellierung eines Wohnanhängers gelöst.

Durch die Nivellierung wird der Fahrzeug- bzw. Wohnanhänger im Stand im Wesentlichen horizontal ausgerichtet, unabhängig von der initialen Schrägstellung des Fahrzeuganhängers, welche dieser aufgrund des unebenen Untergrunds und/oder einer ungleichen Gewichtsverteilung einnimmt.

Das Verfahren umfasst ein Erfassen der Schrägstellung des Fahrzeuganhängers, insbesondere einer Schrägstellung um die Längsachse X (Rollen) des Fahrzeuganhängers. Die Erfassung erfolgt mittels einer Sensorvorrichtung. Insbesondere kann die Erfassung einmalig, zyklisch wiederholt oder dauerhaft erfolgen.

Die Sensorvorrichtung kann zumindest einen Lagesensor umfassen, welcher dazu eingerichtet ist die Schrägstellung des Fahrzeuganhängers um die Querachse und/oder Längsachse zu ermitteln.

Der Lagesensor kann ein Beschleunigungssensor (Accelerometer), ein Gyroskop, ein Neigungssensor (Inclinometer), ein Magnetometer, ein optischer Sensor, ein Untergrundabstandssensor und/oder dergleichen sein. Ebenso kann der Lagesensor ein kombinierter Sensor sein, der zumindest zwei der vorgenannten Sensoren kombiniert, oder die Sensorvorrichtung kann unterschiedliche Lagesensoren umfassen. Diese können weiterhin an unterschiedlichen Stellen des Fahrzeuganhängers angeordnet oder anordenbar sein. Somit kann neben der Schrägstellung auch eine Verformung des Fahrzeuganhängers bestimmt werden. Wird ein optischer und/oder Bodenabstandssensor eingesetzt, kann der Abstand zwischen Fahrzeuganhänger und Untergrund an mehreren Stellen bestimmt und hieraus eine Schrägstellung des Fahrzeuganhängers ermittelt werden.

In einem Aspekt der Erfindung ist der zumindest eine Lagesensor fest mit dem Fahrzeuganhänger verbunden und/oder Teil eines Brems- und/oder Antischlingersystems des Fahrzeuganhängers. Der Lagesensor kann mit hin ausschließlich für das Nivellierverfahren genutzt werden (also ein eigenständiger Lagesensor des Nivelliersystem sein), oder es kann auf zumindest einen Lagesensor eines anderen Systems des Fahrzeuganhängers (z.B. ein Bremssystem oder ein Antischlingersystem) zurückgegriffen werden.

In einem Aspekt der Erfindung umfasst die Sensorvorrichtung ein Smart Device, wie beispielsweise ein Smartphone, eine Smartwatch, oder ein Tabletcomputer. In diesem Fall können die Lagesensoren des Smart Devices genutzt werden, um die Schrägstellung des Fahrzeuganhängers zu bestimmen oder jedenfalls mitzubestimmen. Ebenso kann die Sensorvorrichtung durch das Smart Device gebildet werden.

Das Verfahren umfasst weiterhin, dass Bestimmen einer Position eines Hebemittels in Bezug auf ein Rad des Fahrzeuganhängers. Das Rad ist das Rad, welches zur Nivellierung angehoben werden muss.

Das Hebemittel kann beispielsweise ein Auffahrtskeil sein, welcher vor oder hinter dem anzuhebenden Rad positioniert wurde. In einer alternativen

Variante kann das Hebemittel ein Hubkissen sein, welcher vor oder hinter dem anzuhebenden Rad positioniert wurde. Andere Hebemittel sind ebenso möglich.

Das Bestimmen der Position des Hebemittels kann automatisiert, beispielsweise durch entsprechende Sensoren (z.B. optische Sensoren), erfolgen. Beispielsweise kann die Kamera eines Smart Devices genutzt werden. Alternativ kann die Position durch eine Benutzereingabe bestimmt werden. Beispielsweise kann der Benutzer angeben, an welchem Rad (rechts, links) das Hebemittel positioniert wurde, und ob das Hebemittel in Vorwärtsfahrtrichtung oder Rückwärtsfahrtrichtung positioniert wurde.

Anschließend kann zumindest ein Rangierantrieb des Fahrzeuganhängers mittels einer Steuervorrichtung so angesteuert werden, dass der Fahrzeuganhänger zur Nivellierung auf das Hebemittel gefahren wird.

Der Rangierantrieb kann unmittelbar auf zumindest ein Rad des Fahrzeuganhängers wirken (angetriebenes Rad), oder mittelbar. Im Falle eines mittelbaren Rangierantriebs kann der Rangierantrieb einen Motor (typischerweise E-Motor) und ein Reibrad umfassen, welches von dem Motor angetrieben wird. Das Reibrad wird sodann auf ein Rad des Fahrzeuganhängers gepresst, um dieses anzutreiben. Typischerweise ist einem linken Rad und einem rechten Rad des Fahrzeuganhängers jeweils ein Rangierantrieb zugeordnet.

Die Ansteuerung erfolgt automatisiert, basierend auf den Daten zur Position des Hebemittels und/oder den Daten, welche die Schrägstellung des Fahrzeuganhängers angeben.

Das Ansteuern des Rangierantriebs wird beispielsweise solange fortgesetzt, bis das Rad eine gewünschte Höhe erreicht hat, also weit genug auf das Hebemittel aufgefahren wurde, sodass der Fahrzeuganhänger um die Längsachse X nivelliert ist. Anschließend wird der Rangierantrieb gestoppt und das Rad optional gebremst (z.B. mittels einer Feststellbremse). Der Rangierantrieb kann basierend auf den Daten der Schrägstellung des Anhängers geregelt werden. Es hat sich gezeigt, dass hiermit eine einfache, automatische und exakte Nivellierung möglich ist.

Alternativ oder zusätzlich kann ein Hebemittelstellantrieb mittels der Steuervorrichtung angesteuert werden, um den Fahrzeuganhänger um die Längsachse X zu nivellieren. Ist das Hebemittel beispielswiese ein Hubkissen, kann ein Rad des Fahrzeuganhängers zunächst automatisiert auf das Hubkissen aufgefahren werden. Im Anschluss kann das Hubkissen mittels des Hebemittelstellantriebs soweit (z.B. mit Luft) gefüllt werden, bis der Fahrzeuganhänger nivelliert ist. Der Hebemittelstellantrieb kann in diesem Fall ein Kompressor sein, der mit dem Hubkissen verbunden ist und von der Steuervorrichtung ansteuerbar ist.

Die Steuervorrichtung kann eine eigenständige Steuervorrichtung sein, die in den Fahrzeuganhänger integriert ist. Jedenfalls ein Teil (z.B. Bedienteil) der Steuervorrichtung kann portabel sein, um die Bedienung zu vereinfachen. In einer anderen Ausführungsform umfasst die Steuervorrichtung ein Smart Device (z.B. ein Smartphone, eine Smart Watch, ein Tabletcomputer, oder dergleichen), oder wird durch dieses Smart Device gebildet.

Die Steuervorrichtung kann also ein erstes Smart-Device, insbesondere ein Smartphone, ein Tabletcomputer oder eine Smartwatch, sein bzw. dieses umfassen. Die Sensorvorrichtung kann ein zweites Smart-Device umfasst oder durch dieses gebildet sein.

In einem Beispiel kann ein Benutzter ein erstes Smart Device (z.B. sein Smartphone) als Steuervorrichtung nutzen, und dieses zum Nivellieren des Fahrzeuganhängers in der Hand halten. Ein zweites Smart Device (z.B. Smartphone, Tablet Computer, Smart Watch, ...), welches mit dem ersten Smart Device in Kommunikationsverbindung steht kann als Sensorvorrichtung genutzt werden. Hierzu wird das zweite Smart Device in oder auf den Fahrzeuganhänger gelegt, um die Schrägstellung des Fahrzeuganhängers zu ermitteln. Um eine möglichst exakte und gleichbleibende Ausrichtung des zweiten Smart Device relativ zum Fahrzeuganhänger zu gewährleisten, kann eine Sensorhalterung am bzw. im Fahrzeuganhänger bereitgestellt sein, welche dazu eingerichtet ist das zweite Smart Device zu fixieren.

In einem weiteren Beispiel wird ein Smart Device als Steuervorrichtung und Sensorvorrichtung genutzt. Hierzu wird das Smart Device vorzugsweise während des Nivellierens in oder auf den Fahrzeuganhänger gelegt bzw. am oder im Fahrzeuganhänger fixiert (über eine entsprechende Halterung). Alternativ kann die Erfassung der Schrägstellung des Anhängers optisch - durch einen optischen Sensor (Kamera) des Smart Devices erfolgen. In diesem Fall muss das Smart Device, welches zugleich als Steuervorrichtung und Sensorvorrichtung dient, so positioniert werden, dass der Fahrzeuganhänger optisch erfasst werden kann.

In den vorgenannten Beispielen kann das Smart Device dem Benutzer eine Information ausgeben, ob das als Sensorvorrichtung fungierende Smart Device korrekt positioniert ist.

Mithin kann auf zusätzliche Sensoren bzw. Steuergräte verzichtet werden, und der Benutzter kann sein vorhandenes Smart Device/seine Smart Devices nutzen. Hierdurch werden Kosten gespart. Durch die Verwendung von Hebemitteln, wie Auffahrkeilen oder Hubkissen, können zusätzliche Kosten und Gewicht eingespart werden.

In einem weiteren Aspekt kann das Verfahren das Ausgeben einer Anweisung zur Positionierung des Hebemittels umfassen. Nach dem Erfassen der Schrägstellung kann die Steuervorrichtung dem Benutzer angeben, an welcher Stelle (z.B. linkes Rad, rechtes Rad, in Vorwärtsfahrtrichtung, in Rückwärtsfahrtrichtung) das Hebemittel zu positionieren ist, um die erfasste Schrägstellung, insbesondere um die Längsachse X, durch Auffahren auf das Hebemittel auszugleichen. Die Anweisung kann beispielsweise optisch (z.B. auf einer optischen Anzeige (Display) der Steuervorrichtung, oder an einer Anzeigevorrichtung (z.B. LED) am Fahrzeuganhänger) und/oder akustisch ausgegeben werden. Insbesondere kann die Anweisung durch eine Überblendung eines Live-Bildes des Fahrzeuganhängers (Virtual Reality) mit einer Darstellung des Hebemittels angezeigt werden.

Nachdem das Hebemittel positioniert wurde, kann ein Benutzer die Positionierung bestätigen, sodass die Position des Hebemittels in Bezug auf das Rad des Fahrzeuganhängers, welches zur Nivellierung angehoben werden muss bestimmt ist.

In einem weiteren Aspekt kann das Verfahren das Erfassen einer Schrägstellung des Fahrzeuganhängers, insbesondere einer Schrägstellung um die Querachse Y des Fahrzeuganhängers, mittels der Sensorvorrichtung umfassen. Hierzu kann die Sensorvorrichtung zumindest einen Lagesensor und/oder zumindest einen optischen Sensor umfassen. Für die Erfassung der Schrägstellung des Fahrzeuganhängers um die Längsachse und um die Querachse kann der gleiche Sensor/die gleichen Sensoren eingesetzt werden, oder die Schrägstellung des Fahrzeuganhängers um die Längsachse kann von einem anderen Sensor (von anderen Sensoren) erfasst werden, als die die Schrägstellung des Fahrzeuganhängers um die Querachse.

Nachdem die Schrägstellung des Fahrzeuganhängers um die Querachse Y erfasst wurde, kann zumindest ein Stützenantrieb des Fahrzeuganhängers so angesteuert werden, dass der Fahrzeuganhänger mittels einer dem Stützenantrieb zugeordneten Anhängerstütze um die Querachse Y nivelliert wird. Mithin kann der Fahrzeuganhänger automatisiert nivelliert und horizontal ausgerichtet werden.

Der Stützenantrieb ist vorzugsweise an dem Fahrzeuganhänger fixiert und somit Teil des Fahrzeuganhängers. Es ist aber auch möglich, dass der Stützenantrieb abnehmbar ist. Beispielsweise kann der Stützenantrieb einen elektrischen (Getriebe)Motor umfassen, der auf eine Gewindespindel oder eine Zahnstange wirkt. Eine Drehung des Motors führt sodann zum Ausfahren (bzw. Einfahren) der Anhängerstütze. Ebenso kann der Stützenantrieb ein Linearantrieb sein.

Typischerweise ist zumindest je eine Anhängerstütze in einem Heckbereich und einem Frontbereich des Fahrzeuganhängers angeordnet. Beispielsweise kann der Fahrzeuganhänger zwei Front-Anhängerstützen (links und rechts) und zwei Heck-Anhängerstützen (links und rechts) umfassen, denen jeweils ein Stützenantrieb zugeordnet ist. Die Front-Anhängerstütze kann auch durch ein höhenverstellbares Stützrad des Fahrzeuganhängers gebildet werden. Die Stützenantriebe können zur Nivellierung des Fahrzeuganhängers von der Steuervorrichtung angesteuert werden. Die Ansteuerung kann eine Regelung umfassen, sodass der Stützenantrieb gestoppt wird, wenn die Schrägstellung des Fahrzeuganhängers ausgeglichen und der Fahrzeuganhänger nivelliert ist.

Das Verfahren kann weiterhin das Ansteuern (mittels der Steuervorrichtung) zumindest eines weiteren Stützenantriebs des Fahrzeuganhängers umfassen. Der zumindest eine weitere Stützenantrieb ist hierbei einer weitere Anhängerstütze zugeordnet, sodass der Fahrzeuganhänger mittels der zumindest einen weiteren Anhängerstütze abgestützt wird.

Ist initial beispielsweise die Front des Fahrzeuganhängers abgesenkt (nickt der Fahrzeuganhänger also nach vorne), kann zunächst mit der/den Front-Anhängerstützen (bzw. den zugeordneten Stützenantrieben) die Schrägstellung des Fahrzeuganhängers nivelliert werden. Um ein anschließendes Verkippen in Richtung des Hecks zu vermeiden, können die den Heck-Anhängerstützen bzw. der Heck-Anhängerstütze zugeordneten Stützenantriebe so angesteuert werden, dass auch diese ausfahren und den Fahrzeuganhänger gegen ein Verkippen in Richtung des Hecks abstützen. Entsprechend kann bei einem heckseitig abgesenkten Anhänger zunächst zumindest eine Heck-Anhängerstütze zur Nivellierung genutzt werden, bevor zumindest eine Front-Anhängerstütze ausgefahren wird, um den Fahrzeuganhänger gegen ein Verkippen in Richtung der Front abzustützen.

Ebenso ist es möglich, dass die Front- und Heckanhängerstützen im Wesentlichen zeitgleich ausgefahren werden (über eine entsprechende Ansteuerung der Stützenantriebe), um den Fahrzeuganhänger zu nivellieren und abzustützen.

Die Ansteuerung der Antriebe, wie Rangierantrieb, Hebemittelstellantrieb, Stützenantrieb, erfolgt vorzugsweise kabelungebunden (z.B. via Bluetooth). Hierzu können die Antriebe eine Kommunikationsschnittstelle umfassen, oder mit einer Kommunikationsschnittstelle verbunden sein. Die zumindest eine Kommunikationsschnittstelle empfängt Daten von der Steuervorrichtung und wandelt diese Daten in entsprechende an Steuersignale zur Ansteuerung des Antriebs/der Antriebe um. Ebenso ist es möglich, dass die Steuervorrichtung unmittelbar Steuersignale sendet, die von der Kommunikationsschnittstelle empfangen und weitergeleitet werden.

In einem Aspekt kann die Kommunikationsschnittstelle dazu eingerichtet sein mit der Sensorvorrichtung zu kommunizieren. Die Kommunikationsschnittstelle kann beispielsweise von der Sensorvorrichtung erfasste Sensordaten an die Steuervorrichtung weitergegeben, oder Befehle von der Steuervorrichtung an die Sensorvorrichtung kommunizieren.

In einem weiteren Aspekt umfasst das Verfahren zumindest einen der nachfolgenden Schritte:
- Anlernen der Sensorvorrichtung in der Steuervorrichtung
- Anlernen des zumindest eines Rangierantriebs in der Steuervorrichtung
- Anlernen des zumindest einen Hebemittelstellantriebs in der Steuervorrichtung und/oder
- Anlernen des zumindest einen Stützenantriebs in der Steuervorrichtung.

Durch das Anlernen ist es möglich, zwischen der Steuervorrichtung und der Sensorvorrichtung bzw. den Antrieben zu kommunizieren. Das Anlernen ermöglicht mithin, dass eine Steuervorrichtung für unterschiedliche Fahrzeuganhänger genutzt werden kann.

Weiterhin kann das Anlernen auch ein Kalibrieren der Sensorvorrichtung (bzw. der entsprechenden Sensoren) und/oder der Antriebe umfassen. Somit wird eine korrekte und schnelle Nivellierung sichergestellt.

Die Aufgabe wird weiterhin durch ein System (Nivelliersystem) zur Nivellierung eines Fahrzeuganhängers, insbesondere zur Nivellierung eines Wohnanhängers gelöst. Das System ist dazu eingerichtet, das oben beschriebene Verfahren auszuführen. Mithin können mit dem System die oben beschriebenen Vorteile erreicht werden.

Das erfindungsgemäße System umfasst eine Sensorvorrichtung. Die Sensorvorrichtung ist zur Erfassung einer Schrägstellung des Fahrzeuganhängers, insbesondere um die Längs- und/oder Querachse, eingerichtet. Wie oben bereits beschrieben wurde, kann die Sensorvorrichtung zumindest einen Lagesensor umfassen, welcher dazu eingerichtet ist die Schrägstellung des Fahrzeuganhängers um die Querachse und/oder Längsachse zu erfassen.

In einem Aspekt der Erfindung umfasst die Sensorvorrichtung ein Smart Device, wie beispielsweise ein Smartphone, eine Smartwatch, oder ein Tabletcomputer. In diesem Fall können die Lagesensoren des Smart Devices genutzt werden, um die Schrägstellung des Fahrzeuganhängers zu bestimmen oder jedenfalls mitzubestimmen. Ebenso kann die Sensorvorrichtung durch das Smart Device gebildet werden. Alternativ oder zusätzlich kann die Sensorvorrichtung bzw. der zumindest eine Lagesensor fest mit dem Fahrzeuganhänger verbunden und/oder Teil eines Brems- und/oder Antischlingersystems des Fahrzeuganhängers sein.

Um die Sensorvorrichtung relativ zum Fahrzeuganhänger zu fixieren kann das System eine Sensorhalterung umfassen, welche am Fahrzeuganhänger angeordnet ist. Die Sensorhalterung kann beispielsweise eine Halterung für ein Smart Device sein, welches als Sensorvorrichtung dient.

Das erfindungsgemäße System umfasst weiterhin eine Sensorvorrichtung, wobei die Steuervorrichtung dazu eingerichtet ist, basierend auf Sensordaten der Sensorvorrichtung zumindest einen Rangierantrieb und/oder einen Hebemittelstellantrieb anzusteuern, um den Fahrzeuganhänger um die Längsachse zu nivellieren. Die Ansteuerung erfolgt wie oben beschrieben. Die Kommunikation zwischen der Steuervorrichtung und der Sensorvorrichtung erfolgt vorzugsweise drahtlos (z.B. über Bluetooth). Ebenso ist es möglich, dass die Sensorvorrichtung und die Steuervorrichtung durch eine integrierte Vorrichtung gebildet werden (z.B. ein Smart Device). In diesem Fall kann zur Kommunikation die interne Kommunikationsarchitektur der Vorrichtung genutzt werden.

Die Kommunikation zwischen den Antrieben und der Steuervorrichtung erfolgt ebenfalls vorzugsweise drahtlos.

In einem weiteren Aspekt umfasst das System weiterhin zumindest einen Rangierantrieb. Der Rangierantrieb ist dazu eingerichtet, von der Steuervorrichtung angesteuert zu werden und ein Rad des Fahrzeuganhängers rotierend zu bewegen. Der Rangierantrieb dient mithin der Bewegung des Fahrzeuganhängers, insbesondere, wenn dieser von dem Zugfahrzeug getrennt wurde. Die Ansteuerung ermöglicht es den Fahrzeuganhänger (so weit) auf ein Hebemittel (z.B. ein Auffahrtskeil) aufzufahren, bis ein Rollen des Fahrzeuganhängers ausgeglichen und eine Schrägstellung des Fahrzeuganhängers um die Längsachse X nivelliert ist.

Weiterhin kann das System einen Hebemittelstellantrieb umfassen. Der Hebemittelstellantrieb ist dazu eingerichtet, von der Steuervorrichtung angesteuert zu werden, und ein Rad des Fahrzeuganhängers (mittels des Hebemittels) translatorisch zu bewegen, wenn das Rad auf einem dem Hebemittelstellantrieb zugeordneten Hebemittel angeordnet ist. Das Hebemittel kann beispielsweise ein Hubkissen sein. Der Hebemittelstellantrieb kann ein Kompressor sein. Die translatorische Bewegung ermöglicht ein anheben bzw. absenken des Rades und somit die Nivellierung der Schrägstellung des Fahrzeuganhängers (insbesondere Rollen).

In einem weiteren Aspekt umfasst das System zumindest eine Anhängerstütze. Insbesondere kann das System zumindest eine Front-Anhängerstütze und zumindest eine Heck-Anhängerstütze umfassen. Beispielsweise umfasst das System zwei Front-Anhängerstützen (links und rechts) und zwei Heck-Anhängerstützen (links und rechts).

Die Anhängerstütze(n) ist/sind mittels eines zugeordneten Stützenantriebs von einer ersten in eine zweite Stellung überführbar. Mithin sind die Anhängerstützen ein- bzw. ausfahrbar. Die Steuervorrichtung kann in diesem Aspekt dazu eingerichtet sein den Stützenantrieb (bzw. die Stützenantriebe) so anzusteuern, dass eine Schrägstellung des Fahrzeuganhängers um eine Querachse Y nivelliert wird. Dies erfolgt vorzugsweise wie oben beschrieben.

Die Aufgabe wird weiterhin durch einen automatisch nivellierbaren Fahrzeuganhänger, insbesondere Wohnanhänger gelöst. Der erfindungsgemäße Fahrzeuganhänger umfasst ein Fahrgestell, eine Anhängevorrichtung, welche am Fahrgestell angeordnet ist und dazu dient, den Fahrzeuganhänger mit einem Zugfahrzeug zu koppeln und zumindest zwei Räder, welche am Fahrgestell angeordnet sind. Zudem umfasst der Fahrzeuganhänger das vorhergehend beschriebene Nivelliersystem.

Weiterhin wir die Aufgabe durch ein Computerprogramm gelöst, welches Anweisungen umfasst, die, wenn sie von zumindest einem Prozessor (insbesondere einem Prozessor der Steuervorrichtung) ausgeführt werden, den Prozessor dazu veranlassen, ein erfindungsgemäßes Verfahren auszuführen.

### Kurze Beschreibung der Figuren

Die Erfindung wird nachfolgend anhand der beigefügten Figuren beispielhaft näher erläutert. Es zeigen:
- Figur 1: eine Heckansicht eines Fahrzeuganhängers in Schrägstellung;
- Figur 2: eine Heckansicht des nivellierten Fahrzeuganhängers;
- Figur 3: eine Seitenansicht eines Fahrzeuganhängers in Schrägstellung;
- Figur 4: eine Seitenansicht des nivellierten Fahrzeuganhängers;
- Figur 5: eine Seitenansicht des nivellierten und abgestützten Fahrzeuganhängers;
- Figur 6: eine schematische Darstellung eines Systems zur Nivellierung eines Fahrzeuganhängers, und
- Figur 7: eine schematische Darstellung eines Verfahrens zur Nivellierung eines Fahrzeuganhängers.

### Beschreibung der Figuren

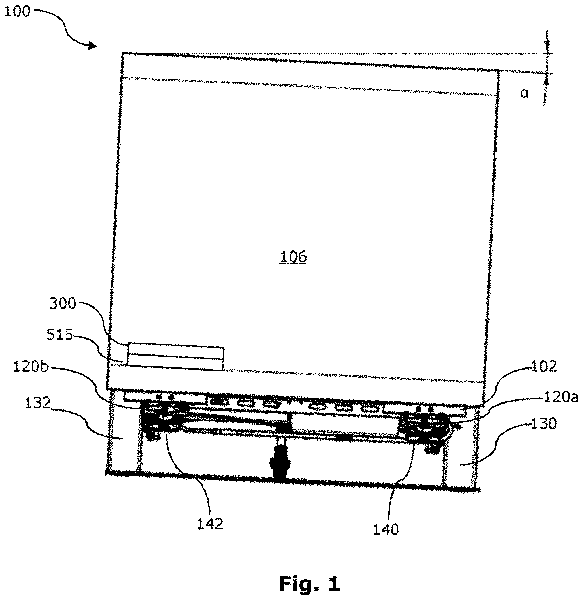

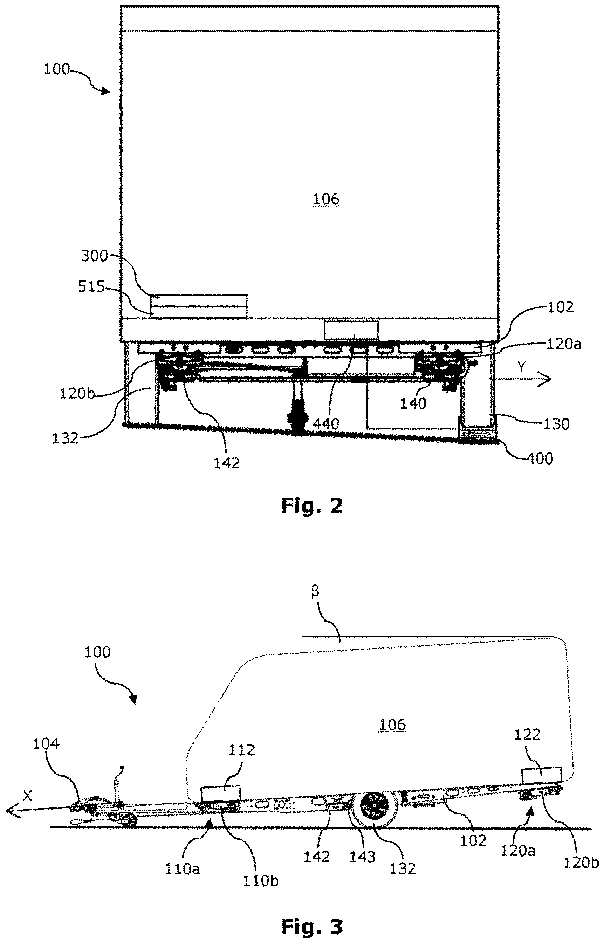

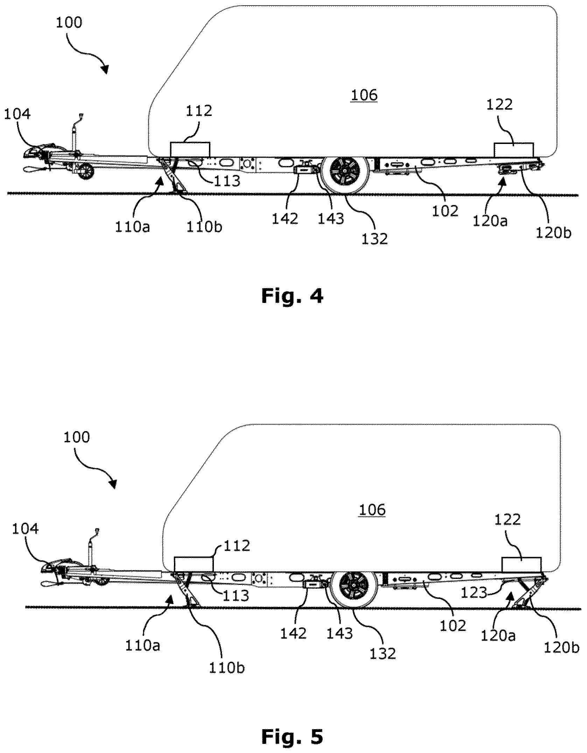

Figur 1 zeigt eine Heckansicht eines Fahrzeuganhängers 100 (hier eines Wohnanhängers) in Schrägstellung. Der Fahrzeuganhänger 100 ist um eine Längsachse X (s. Fig. 3) verkippt. In Figur 2 ist der Fahrzeuganhänger nivelliert. In Figur 3 ist der Fahrzeuganhänger um eine Querachse Y verkippt (s. Fig. 1). In den Figuren 4 und 5 ist der Fahrzeuganhänger 100 nivelliert und abgestützt.

Der dargestellte Fahrzeuganhänger 100 ist exemplarisch und keinesfalls beschränkend zu verstehen. Der Fahrzeuganhänger umfasst ein Fahrgestell 102 an welchem je ein linkes Rad 132 und ein rechtes Rad 130 angeordnet ist. Es versteht sich, dass das erfindungsgemäße Verfahren und System entsprechend auch für Fahrzeuganhänger mit einer Tandem- oder Doppelachse Anwendung finden kann.

Weiterhin umfasst der Fahrzeuganhänger 100 eine Anhängevorrichtung 104, welche dazu dient den Fahrzeuganhänger 100 mit einem Zugfahrzeug (nicht dargestellt) zu koppeln.

Auf dem Fahrgestell 102 ist ein Aufbau 106 angeordnet. Der dargestellte Aufbau 106 ist ein Campingaufbau. Andere Aufbauten, wie z.B. zum Viehtransport, sind ebenfalls möglich.

Der gezeigte Fahrzeuganhänger 100 umfasst weiterhin je zwei Front-Anhängerstützen 110a, 110b, welchen jeweils ein Stützenantrieb 112 zugeordnet ist. Weiterhin umfasst der Fahrzeuganhänger 100 je zwei Heck-Anhängerstützen 120a, 120b, welchen ebenfalls jeweils ein Stützenantrieb 122 zugeordnet ist.

Die Stützenantriebe 112, 122 umfassen jeweils eine motorisch antreibbare Spindel 113, 123. Eine Drehung der Spindel 113, 123 führt dazu, dass die entsprechende Anhängerstütze ausgefahren (bzw. eingefahren) wird.

Zudem umfasst der Fahrzeuganhänger zwei Rangierantriebe 140, 142. Der Rangierantrieb 140 ist dem rechten Rad zugeordnet und der Rangierantrieb 142 ist dem linken Rad zugeordnet. Über ein Reibrad 143 kann der Rangierantrieb das jeweilige Rad antreiben.

In der Darstellung nach Figur 1 ist der Fahrzeuganhänger 100 um eine Längsachse X (s. Fig. 3) verkippt. Der Verkippungswinkel α (Rollwinkel) beträgt etwa 3°.

In der Darstellung nach Figur 3 ist der Fahrzeuganhänger 100 um eine Querachse Y (s. Fig. 1) verkippt. Der Verkippungswinkel β (Nickwinkel) beträgt etwa 5°.

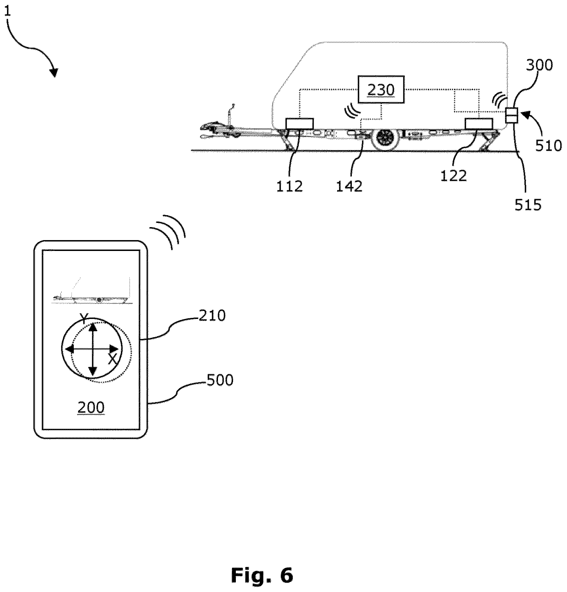

Zur Erfassung der Schräglage (Winkel α und β) ist eine Sensorvorrichtung 300 vorgesehen. Diese kann, wie in Figur 6 dargestellt ist, ein Smart Device 510 sein. Die Sensorvorrichtung 300 ist über eine Sensorhalterung 515 am Fahrzeuganhänger fixiert.

Um den Fahrzeuganhänger automatisiert zu nivellieren, kann das in Figur 6 dargestellte System 1 genutzt werden. Das System umfasst eine Steuervorrichtung 200, welche Steuervorrichtung 200 ein Smart Device 500 sein kann, z.B. ein Smartphone oder ein Tabletcomputer. Weiterhin umfasst die Steuervorrichtung 200 eine Anzeige 210, welche der Ausgabe von optischen Informationen an einen Benutzer dient.

Diese Informationen können die aktuelle Schräglage des Fahrzeuganhängers 100 umfassen. Wie in Fig. 6 dargestellt ist, kann hierzu auf der Anzeige eine virtuelle Wasserwaage eingeblendet werden. Kommen die beiden Kreise (Kreis mit durchgezogener Line und Kreis mit gestrichelter Linie) zur Deckung, ist der Fahrzeuganhänger vollständig nivelliert. Andere Darstellungen sind ebenfalls möglich. Zudem können auf der Anzeige Informationen ausgegeben werden, wo das Hebemittel zu positionieren ist. Hierzu kann eine entsprechende Darstellung des Anhängers (z.B. Live-Bild) und des zu positionierenden Hebemittels angezeigt werden. Eine schematische Darstellung des Fahrzeuganhängers und/oder Hebemittels ist ebenfalls möglich.

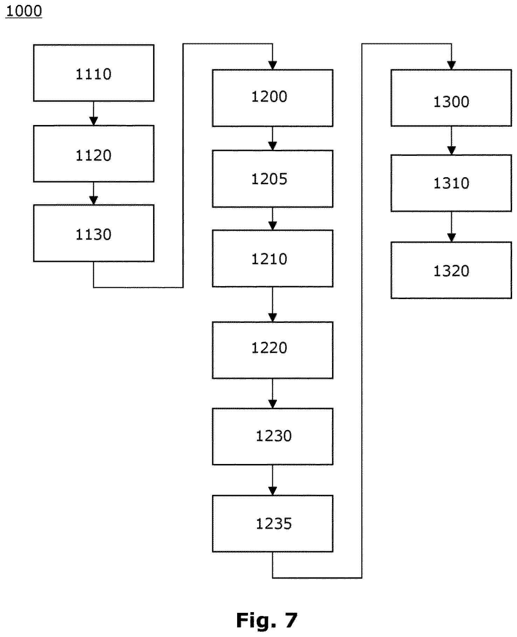

Die Steuervorrichtung 200 kann einen Prozessor und einen Speicher (nicht dargestellt) umfassen. Der Prozessor kann dazu eingerichtet sein, Anweisungen auszuführen. Werden die Anweisungen ausgeführt, wird ein Verfahren zur Nivellierung des Fahrzeuganhängers 100 ausgeführt. Ein schematisches Ablaufdiagramm des Verfahrens ist in Figur 7 dargestellt. Die Nivellierung des Fahrzeuganhängers 100 ist in den Figuren 1 bis 5 zu sehen.

Die Steuervorrichtung 200 kann mit der Sensorvorrichtung 300 kommunizieren. Die Kommunikation erfolgt vorzugsweise drahtlos, wie durch die angedeuteten Funkwellen in Figur sechs dargestellt ist.

Um den Fahrzeuganhänger automatisch zu nivellieren, wird zunächst eine Schrägstellung des Fahrzeuganhängers 100 erfasst. Anschließend wird eine Position eines Hebemittels 400 in Bezug auf eine Rad, welches zur Nivellierung angehoben werden muss, bestimmt. Die Bestimmung kann durch eine Bestätigung des Benutzers erfolgen, dass das Hebemittel entsprechend positioniert wurde. Alternativ kann die Bestimmung durch die Auswertung von optischen Daten erfolgen, welche mit der Steuervorrichtung 200, erzeugt wurden. Beispielsweise kann ein Benutzer ein Foto oder eine Videoaufnahme von dem zu nivellierenden Fahrzeuganhänger machen, und diese Bilddaten können dann ausgewertet werden, um die Position des Hebemittels 400 zu bestimmen.

In der in Figur 2 gezeigten Darstellung ist das Hebemittel in Vorwärtsfahrtrichtung vor dem rechten Rad 130 angeordnet. Um die Nivellierung des Fahrzeuganhängers 100 zu erreichen, wird ein Rangierantrieb 140 von der Steuervorrichtung 200 so angesteuert, dass der Fahrzeuganhänger 100 auf das Hebemittel 400 gefahren wird. Handelt es sich bei dem Hebemittel 400 um einen Auffahrkeil, kann der Rangierantrieb so lange angesteuert werden, bis der Fahrzeuganhänger 100 ausreichend weit auf den Auffahrkeil aufgefahren wurde, um den Fahrzeuganhänger um die Längsachse X zu nivellieren.

Handelt es sich bei dem Hebemittel 400 beispielsweise um ein Hubkissen, kann zusätzlich ein Hebemittelstellantrieb 440 (beispielsweise ein Kompressor) von der Steuervorrichtung 200 angesteuert werden, bis der Fahrzeuganhänger um die Längsachse X nivelliert ist.

Zusätzlich kann der Fahrzeuganhänger 100, wie in Figur 3 dargestellt, um eine Querachse Y verkippt sein (Nicken). Auch diese Schrägstellung kann mittels der Sensorvorrichtung 300 ermittelt werden. Um das Nicken auszugleichen und den Fahrzeuganhänger 100 auch um die Querachse zu nivellieren, kann die Steuereinrichtung 200 dazu eingerichtet sein, zumindest einen Stützenantrieb 112 des Fahrzeuganhängers 100 so anzusteuern, dass die zugeordnete Anhängerstütze, hier die Stützen 110a, 110b, ausgefahren werden, bis der Fahrzeuganhänger auch um die Querachse Y nivelliert ist. Dies ist in Figur 4 dargestellt. Hier sind die Front-Anhängerstützen 110a, 110b bereits ausgefahren, und der Fahrzeuganhänger 100 nivelliert.

Um den Fahrzeuganhänger 100 gegen ein Verkippen um die Querachse Y in Heckrichtung zu sichern, können anschließend die Heck-Anhängerstützen 120a, 120b automatisiert ausgefahren werden. Hierzu kann die Steuervorrichtung 200 den Stützen Antrieb 122 entsprechend ansteuern. Wie in Figur 5 gezeigt ist, ist der Fahrzeuganhänger 100 sodann vollständig nivelliert, d.h. horizontal ausgerichtet und gegen ein unerwünschtes Verkippen gesichert.

Um die Kommunikation zwischen der Steuervorrichtung 200 der Sensorvorrichtung 300 und den Antrieben (Rangierantrieb 140, 142, Hebemittelstellantrieb 440, Stützenantrieb 112, 122) zu ermöglichen, kann zumindest eine Kommunikationsschnittstelle 230 vorgesehen sein.

Die zumindest eine Kommunikationsschnittstelle 230 empfängt Daten von der Steuervorrichtung 200 (vorzugsweise kabellos) und wandelt diese Daten in entsprechende an Steuersignale zur Ansteuerung der Antriebe (Rangierantrieb 140, 142, Hebemittelstellantrieb 440 und/oder Stützenantrieb 112, 122) um, oder leitet empfangene Steuersignale an die Antriebe weiter. Ebenso kann die Kommunikationsschnittstelle 230 dazu eingerichtet sein, mit der Sensorvorrichtung 300 zu kommunizieren.

Figur 7 zeigt eine schematische Darstellung eines Verfahrens 1000 zur Nivellierung eines Fahrzeuganhängers 100. Das Verfahren 1000 umfasst die folgenden Schritte:
- Optional: Anlernen 1110 der Sensorvorrichtung 300 in der Steuervorrichtung 200, wobei das Anlernen ein Kalibrieren der Sensorvorrichtung 300 umfassen kann.
- Optional: Anlernen 1120 des zumindest eines Rangierantriebs 140, 142 und/oder des Hebemittelstellantriebs in der Steuervorrichtung 200, wobei das Anlernen ein Kalibrieren der Antriebe umfassen kann.
- Optional: Anlernen 1130 des zumindest einen Stützenantriebs 112, 122 in der Steuervorrichtung 200, wobei das Anlernen ein Kalibrieren des Antriebs /der Antriebe umfassen kann.

Durch das Anlernen kann die Steuervorrichtung 200 mit den Antrieben bzw. der Sensorvorrichtung 300 kommunizieren.

Weiterhin umfasst das Verfahren die folgenden Schritte:
- Erfassen 1200 einer Schrägstellung des Fahrzeuganhängers 100, insbesondere einer Schrägstellung um die Längsachse X des Fahrzeuganhängers 100 mittels der Sensorvorrichtung 300.
- Optional: Ausgeben 1205 einer Anweisung an den Benutzer, wo ein Hebemittel 400 zu positionieren ist.
- Bestimmen 1210 einer Position eines Hebemittels 400 in Bezug auf ein Rad 130, 132 des Fahrzeuganhängers 100, welches Rad 130, 132 zur Nivellierung angehoben werden muss.
- Ansteuern 1220 zumindest eines Rangierantriebs 140, 142 des Fahrzeuganhängers mittels einer Steuervorrichtung 200, sodass der Fahrzeuganhänger zur Nivellierung auf das Hebemittel 400 gefahren wird, und
- Ansteuern 1230 des Rangierantriebs 140, 142 und/oder Ansteuern 1235 eines Hebemittelstellantriebs 440, sodass der Fahrzeuganhänger 100 um die Längsachse X nivelliert wird.

Soll der Anhänger auch um die Querachse Y nivelliert werden, können die folgenden Verfahrensschritte ausgeführt werden:
- Optional: erneutes Erfassen 1300 einer Schrägstellung des Fahrzeuganhängers 100, insbesondere einer Schrägstellung um die Querachse Y des Fahrzeuganhängers 100, mittels der Sensorvorrichtung 300.
- Ansteuern 1310 zumindest eines Stützenantriebs 112; 122 des Fahrzeuganhängers 100, sodass der Fahrzeuganhänger 100 mittels einer dem Stützenantrieb 112; 122 zugeordneten Anhängerstütze 110a, 110b; 120a, 120b um die Querachse Y nivelliert wird.

Anschließend oder zeitgleich kann in Schritt 1320 zumindest ein weiterer Stützenantrieb des Fahrzeuganhängers 100 angesteuert werden. Dem zumindest einen weiteren Stützenantrieb 122 ist eine weitere Anhängerstütze 120a, 120b (s. Fig. 5) zugeordnet, sodass der Fahrzeuganhänger 100 mittels der zumindest einen weiteren Anhängerstütze abgestützt wird.

### Bezugszeichenliste

- 1: System
- 100: Fahrzeuganhänger
- 102: Fahrgestell
- 104: Anhängevorrichtung
- 106: Aufbau
- 110a, b: Anhängerstütze (Front)
- 112: Stützenantrieb (Front)
- 113: Spindel
- 120a, b: Anhängerstütze (Heck)
- 122: Stützenantrieb (Heck)
- 123: Spindel
- 130: Rad (rechts)
- 132: Rad (links)
- 140: Rangierantrieb (rechts)
- 142: Rangierantrieb (links)
- 143: Reibrad
- 200: Steuervorrichtung
- 210: Anzeige
- 230: Kommunikationsschnittstelle
- 300: Sensorvorrichtung
- 400: Hebemittel (Auffahrkeil, Hubkissen, etc.)
- 440: Hebemittelstellantriebs
- 500: Smart Device
- 510: weiteres Smart Device
- 515: Sensorhalterung
- 1000: Verfahren
- 1110: Anlernen der Sensorvorrichtung
- 1120: Anlernen des zumindest eines Rangierantriebs
- 1130: Anlernen des zumindest einen Stützenantriebs
- 1200: Erfassen einer Schrägstellung
- 1205: Ausgeben einer Anweisung
- 1210: Bestimmen einer Position
- 1220: Ansteuern eines Rangierantriebs
- 1230: Ansteuern des Rangierantriebs
- 1235: Ansteuern eines Hebemittelstellantriebs
- 1300: Erfassen einer Schrägstellung
- 1310: Ansteuern eines Stützenantriebs
- 1320: Ansteuern eines weiteren Stützenantriebs

- α: Winkel
- β: Winkel
- X: Längsachse
- Y: Querachse

## Patentansprüche

1. Verfahren (1000) zur Nivellierung eines Fahrzeuganhängers (100), insbesondere zur Nivellierung eines Wohnanhängers, wobei das Verfahren das Folgende umfasst:
Erfassen (1200) einer Schrägstellung des Fahrzeuganhängers (100), insbesondere einer Schrägstellung um die Längsachse (X) des Fahrzeuganhängers (100), mittels einer Sensorvorrichtung (300);
Bestimmen (1210) einer Position eines Hebemittels (400) in Bezug auf ein Rad (130, 132) des Fahrzeuganhängers (100), welches Rad (130, 132) zur Nivellierung angehoben werden muss;
Ansteuern (1220) zumindest eines Rangierantriebs (140, 142) des Fahrzeuganhängers mittels einer Steuervorrichtung (200), sodass der Fahrzeuganhänger zur Nivellierung auf das Hebemittel (400) gefahren wird, und
Ansteuern (1230) des Rangierantriebs (140, 142) und/oder Ansteuern (1235) eines Hebemittelstellantriebs (440), sodass der Fahrzeuganhänger (100) um die Längsachse (X) nivelliert wird.

2. Verfahren nach Anspruch 1, wobei das Verfahren (1000) weiterhin das
Ausgeben einer Anweisung (1205) zur Positionierung des Hebemittels (400) umfasst.

3. Verfahren nach Anspruch 1 oder 2, wobei das Verfahren (1000) weiterhin das Folgende umfasst:
Erfassen (1300) einer Schrägstellung des Fahrzeuganhängers (100), insbesondere einer Schrägstellung um die Querachse (Y) des Fahrzeuganhängers (100), mittels der Sensorvorrichtung (300);
Ansteuern (1310) zumindest eines Stützenantriebs (112; 122) des Fahrzeuganhängers (100), sodass der Fahrzeuganhänger (100) mittels einer dem Stützenantrieb (112; 122) zugeordneten Anhängerstütze (110a, b; 120a, b) um die Querachse (Y) nivelliert wird.

4. Verfahren nach Anspruch 3, wobei das Verfahren weiterhin das Ansteuern (1320) zumindest eines weiteren Stützenantriebs (112; 122) des Fahrzeuganhängers (100) umfasst, wobei dem zumindest einen weiteren Stützenantrieb (112; 122) eine weitere Anhängerstütze (110a, b; 120a, b) zugeordnet ist, sodass der Fahrzeuganhänger (100) mittels der zumindest einen weiteren Anhängerstütze (110a, b; 120a, b) abgestützt wird.

5. Verfahren nach einem der Ansprüche 1 bis 4, wobei das Verfahren weiterhin zumindest einen der folgenden Schritte umfasst:
Anlernen (1110) der Sensorvorrichtung (300) in der Steuervorrichtung (200);
Anlernen (1120) des zumindest eines Rangierantriebs (140, 142) und/oder des Hebemittelstellantriebs in der Steuervorrichtung (200), und/oder
Anlernen (1130) des zumindest einen Stützenantriebs (112, 122) in der Steuervorrichtung (200).

6. System (1) zur Nivellierung eines Fahrzeuganhängers (100), insbesondere zur Nivellierung eines Wohnanhängers, wobei das System zur Ausführung des Verfahrens (1000) nach einem der Ansprüche 1 bis 5 eingerichtet ist und das Folgende umfasst:
eine Sensorvorrichtung (300), wobei die Sensorvorrichtung zur Erfassung einer Schrägstellung des Fahrzeuganhängers (100) eingerichtet ist;
eine Steuervorrichtung (200), wobei die Steuervorrichtung (200) dazu eingerichtet ist, basierend auf Sensordaten der Sensorvorrichtung (300) zumindest einen Rangierantrieb (140, 142) und/oder einen Hebemittelstellantrieb anzusteuern, um den Fahrzeuganhänger (100) um die Längsachse (X) zu nivellieren.

7. System (1) zur Nivellierung eines Fahrzeuganhängers (100) nach Anspruch 6, wobei das System weiterhin zumindest einen Rangierantrieb (140, 142) umfasst, welcher Rangierantrieb dazu eingerichtet ist,
von der Steuervorrichtung (200) angesteuert zu werden, und
ein Rad des Fahrzeuganhängers rotierend zu bewegen.

8. System (1) zur Nivellierung eines Fahrzeuganhängers (100) nach Anspruch 6 oder 7,
wobei das System weiterhin einen Hebemittelstellantrieb umfasst, welcher Hebemittelstellantrieb dazu eingerichtet ist,
von der Steuervorrichtung (200) angesteuert zu werden, und
ein Rad des Fahrzeuganhängers (100) translatorisch zu bewegen, wenn sich das Rad (130, 132) auf einem dem Hebemittelstellantrieb zugeordneten Hebemittel angeordnet ist.

9. System (1) zur Nivellierung eines Fahrzeuganhängers (100) nach einem der Ansprüche 6 bis 8, wobei das System (1) zumindest eine Anhängerstütze (110a, 110b; 120a, 120b) umfasst, welche Anhängerstütze (110a, 110b; 120a, 120b) mittels eines zugeordneten Stützenantriebs (112, 122) von einer ersten in eine zweite Stellung überführbar ist, wobei
die Steuervorrichtung (200) dazu eingerichtet ist, den Stützenantrieb (112, 122) so anzusteuern, um eine Schrägstellung des Fahrzeuganhängers (100) um eine Querachse (Y) zu nivellieren.

10. System (1) zur Nivellierung eines Fahrzeuganhängers (100) nach einem der Ansprüche 6 bis 9, wobei die Steuervorrichtung (200) ein erstes Smart-Device (500), insbesondere ein Smartphone, ein Tabletcomputer oder eine Smartwatch, umfasst.

11. System (1) zur Nivellierung eines Fahrzeuganhängers (100) nach einem der Ansprüche 6 bis 10, wobei die Sensorvorrichtung (300) ein zweites Smart-Device (510) umfasst, oder wobei die Sensorvorrichtung (300) das erste Smart Device (500) umfasst.

12. System (1) zur Nivellierung eines Fahrzeuganhängers (100) nach einem der Ansprüche 6 bis 11, wobei Sensorvorrichtung (300) zumindest einen Lagesensor umfasst, der fest mit dem Fahrzeuganhänger (100) verbunden ist, und/oder Teil eines Brems- und/oder Antischlingersystems des Fahrzeuganhängers ist.

13. System (1) zur Nivellierung eines Fahrzeuganhängers (100) nach einem der Ansprüche 6 bis 12, weiterhin umfassend eine Sensorhalterung (515), wobei die Sensorhalterung (515) am Fahrzeuganhänger (100) angeordnet ist, und dazu eingerichtet ist die Sensorvorrichtung (300) relativ zum Fahrzeuganhänger (100) zu fixieren.

14. Automatisch nivellierbarer Fahrzeuganhänger (100), insbesondere Wohnanhänger, wobei der Fahrzeuganhänger (100)
ein Fahrgestell (102);
eine Anhängevorrichtung (104), welche am Fahrgestell (102) angeordnet ist;
zumindest zwei Räder (130, 132), welche am Fahrgestell angeordnet sind, und
ein System gemäß einem der Ansprüche 6 bis 13 umfasst.

15. Computerprogramm, umfassend Anweisungen, die, wenn sie von zumindest einem Prozessor ausgeführt werden, den Prozessor dazu veranlassen, ein Verfahren gemäß einem der Ansprüche 1 bis 5 auszuführen.

## Geänderte Patentansprüche

### Geänderte Patentansprüche gemäss Regel 137(2) EPÜ.

1. Verfahren (1000) zur Nivellierung eines Fahrzeuganhängers (100), insbesondere zur Nivellierung eines Wohnanhängers, wobei das Verfahren das Folgende umfasst:
Erfassen (1200) einer Schrägstellung des Fahrzeuganhängers (100), insbesondere einer Schrägstellung um die Längsachse (X) des Fahrzeuganhängers (100), mittels einer Sensorvorrichtung (300);
Bestimmen (1210) einer Position eines Hebemittels (400) in Bezug auf ein Rad (130, 132) des Fahrzeuganhängers (100), welches Rad (130, 132) zur Nivellierung angehoben werden muss;
Ansteuern (1220) zumindest eines Rangierantriebs (140, 142) des Fahrzeuganhängers mittels einer Steuervorrichtung (200), sodass der Fahrzeuganhänger zur Nivellierung auf das Hebemittel (400) gefahren wird, und
Ansteuern (1230) des Rangierantriebs (140, 142) und/oder Ansteuern (1235) eines Hebemittelstellantriebs (440), sodass der Fahrzeuganhänger (100) um die Längsachse (X) nivelliert wird, **dadurch gekennzeichnet, dass** das Verfahren weiterhin ein
Ausgeben einer Anweisung (1205) zur Positionierung eines Hebemittels (400) umfasst.

2. Verfahren nach Anspruch 1, wobei das Verfahren (1000) weiterhin das Folgende umfasst:
Erfassen (1300) einer Schrägstellung des Fahrzeuganhängers (100), insbesondere einer Schrägstellung um die Querachse (Y) des Fahrzeuganhängers (100), mittels der Sensorvorrichtung (300);
Ansteuern (1310) zumindest eines Stützenantriebs (112; 122) des Fahrzeuganhängers (100), sodass der Fahrzeuganhänger (100) mittels einer dem Stützenantrieb (112; 122) zugeordneten Anhängerstütze (110a, b; 120a, b) um die Querachse (Y) nivelliert wird.

3. Verfahren nach Anspruch 2, wobei das Verfahren weiterhin das Ansteuern (1320) zumindest eines weiteren Stützenantriebs (112; 122) des Fahrzeuganhängers (100) umfasst, wobei dem zumindest einen weiteren Stützenantrieb (112; 122) eine weitere Anhängerstütze (110a, b; 120a, b) zugeordnet ist, sodass der Fahrzeuganhänger (100) mittels der zumindest einen weiteren Anhängerstütze (110a, b; 120a, b) abgestützt wird.

4. Verfahren nach einem der Ansprüche 1 bis 3, wobei das Verfahren weiterhin zumindest einen der folgenden Schritte umfasst:
Anlernen (1110) der Sensorvorrichtung (300) in der Steuervorrichtung (200);
Anlernen (1120) des zumindest eines Rangierantriebs (140, 142) und/oder des Hebemittelstellantriebs in der Steuervorrichtung (200), und/oder
Anlernen (1130) des zumindest einen Stützenantriebs (112, 122) in der Steuervorrichtung (200).

5. System (1) zur Nivellierung eines Fahrzeuganhängers (100), insbesondere zur Nivellierung eines Wohnanhängers, wobei das System zur Ausführung des Verfahrens (1000) nach einem der Ansprüche 1 bis 4 eingerichtet ist und das Folgende umfasst:
eine Sensorvorrichtung (300), wobei die Sensorvorrichtung zur Erfassung einer Schrägstellung des Fahrzeuganhängers (100) eingerichtet ist;
eine Steuervorrichtung (200), wobei die Steuervorrichtung (200) dazu eingerichtet ist, basierend auf Sensordaten der Sensorvorrichtung (300) zumindest einen Rangierantrieb (140, 142) und/oder einen Hebemittelstellantrieb anzusteuern, um den Fahrzeuganhänger (100) um die Längsachse (X) zu nivellieren.

6. System (1) zur Nivellierung eines Fahrzeuganhängers (100) nach Anspruch 5, wobei das System weiterhin zumindest einen Rangierantrieb (140, 142) umfasst, welcher Rangierantrieb dazu eingerichtet ist,
von der Steuervorrichtung (200) angesteuert zu werden, und
ein Rad des Fahrzeuganhängers rotierend zu bewegen.

7. System (1) zur Nivellierung eines Fahrzeuganhängers (100) nach Anspruch 5 oder 6,
wobei das System weiterhin einen Hebemittelstellantrieb umfasst, welcher Hebemittelstellantrieb dazu eingerichtet ist,
von der Steuervorrichtung (200) angesteuert zu werden, und
ein Rad des Fahrzeuganhängers (100) translatorisch zu bewegen, wenn sich das Rad (130, 132) auf einem dem Hebemittelstellantrieb zugeordneten Hebemittel angeordnet ist.

8. System (1) zur Nivellierung eines Fahrzeuganhängers (100) nach einem der Ansprüche 5 bis 7, wobei das System (1) zumindest eine Anhängerstütze (110a, 110b; 120a, 120b) umfasst, welche Anhängerstütze (110a, 110b; 120a, 120b) mittels eines zugeordneten Stützenantriebs (112, 122) von einer ersten in eine zweite Stellung überführbar ist, wobei
die Steuervorrichtung (200) dazu eingerichtet ist, den Stützenantrieb (112, 122) so anzusteuern, um eine Schrägstellung des Fahrzeuganhängers (100) um eine Querachse (Y) zu nivellieren.

9. System (1) zur Nivellierung eines Fahrzeuganhängers (100) nach einem der Ansprüche 5 bis 8, wobei die Steuervorrichtung (200) ein erstes Smart-Device (500), insbesondere ein Smartphone, ein Tabletcomputer oder eine Smartwatch, umfasst.

10. System (1) zur Nivellierung eines Fahrzeuganhängers (100) nach einem der Ansprüche 5 bis 9, wobei die Sensorvorrichtung (300) ein zweites Smart-Device (510) umfasst, oder wobei die Sensorvorrichtung (300) das erste Smart Device (500) umfasst.

11. System (1) zur Nivellierung eines Fahrzeuganhängers (100) nach einem der Ansprüche 5 bis 10, wobei Sensorvorrichtung (300) zumindest einen Lagesensor umfasst, der fest mit dem Fahrzeuganhänger (100) verbunden ist, und/oder Teil eines Brems- und/oder Antischlingersystems des Fahrzeuganhängers ist.

12. System (1) zur Nivellierung eines Fahrzeuganhängers (100) nach einem der Ansprüche 5 bis 11, weiterhin umfassend eine Sensorhalterung (515), wobei die Sensorhalterung (515) am Fahrzeuganhänger (100) angeordnet ist, und dazu eingerichtet ist die Sensorvorrichtung (300) relativ zum Fahrzeuganhänger (100) zu fixieren.

13. Automatisch nivellierbarer Fahrzeuganhänger (100), insbesondere Wohnanhänger, wobei der Fahrzeuganhänger (100)
ein Fahrgestell (102);
eine Anhängevorrichtung (104), welche am Fahrgestell (102) angeordnet ist;
zumindest zwei Räder (130, 132), welche am Fahrgestell angeordnet sind, und
ein System gemäß einem der Ansprüche 5 bis 12 umfasst.

14. Computerprogramm, umfassend Anweisungen, die, wenn sie von zumindest einem Prozessor ausgeführt werden, den Prozessor dazu veranlassen, ein Verfahren gemäß einem der Ansprüche 1 bis 4 auszuführen.
